# EUROPEAN PATENT SPECIFICATION

(11) **EP 4 018 528 B1**
(45) Date of publication and mention of the grant of the patent: **18.03.2026**
(21) Application number: 20763983.2
(22) Date of filing: 14.08.2020
(51) Int. Cl.: H02J 9/06

(54) **UNINTERRUPTIBLE POWER SUPPLY**
UNTERBRECHUNGSFREIE STROMVERSORGUNG
ALIMENTATION ÉLECTRIQUE SANS COUPURE

(30) Priority: 21.08.2019 CN 201910772434
(43) Date of publication of application: 29.06.2022
(73) Proprietor: Eaton Intelligent Power Limited, Dublin 4 (IE)
(72) Inventor: HU, Wuhua, Shenzhen, 518101 (CN); REN, Hui, Shenzhen, 518101 (CN); ZHENG, Xiaomin, Shenzhen, 518101 (CN)
(74) Representative: Wagner & Geyer
(86) International application number: PCT/EP2020/025375
(87) International publication number: WO 2021/032317

(56) References cited:
- US-A- 5 579 197
- US-A1- 2006 126 240
- US-A1- 2013 033 109

## Description

### TECHNICAL FIELD

The present invention relates to the field of electronic circuits, and in particular, relates to an uninterruptible power supply.

### BACKGROUND

An uninterruptible power supply can continuously supply power to a load. When the mains voltage is normal, a load is powered by mains power; when the mains voltage is abnormal or mains power is cut off, an inverter is controlled to operate so as to convert direct current (DC) provided by a rechargeable battery to alternating current (AC) and supply power to the load. Currently, the uninterruptible power supply has been widely applied in various fields.

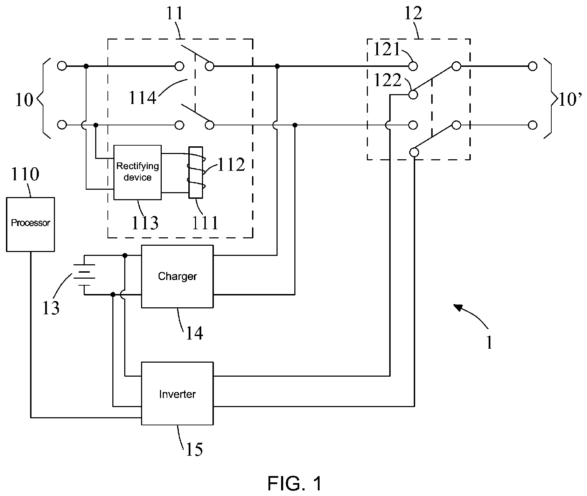

FIG. 1 is a schematic circuit diagram of an uninterruptible power supply in the prior art. As shown in FIG. 1, an uninterruptible power supply 1 comprises: an AC input terminal 10 for receiving AC (such as mains power); an AC output terminal 10' for outputting AC; a normally open (also referred to as "make-type") safety switch device 11 and an output switch 12 that are sequentially connected between the AC input terminal 10 and the AC output terminal 10'; a rechargeable battery 13; a charger 14; an inverter 15; and a processor 110 for controlling the inverter 15 to operate.

An input terminal of the charger 14 is electrically connected to the AC input terminal 10 by means of the normally open safety switch device 11, and the charger 14 is configured to charge the rechargeable battery 13 by using AC on the AC input terminal 10. The inverter 15 controllably converts DC from the rechargeable battery 13 to AC. The output switch 12 comprises a common terminal connected to the AC output terminal 10', a first switching terminal 121, and a second switching terminal 122, wherein the first switching terminal 121 is electrically connected to the normally open safety switch device 11, the second switching terminal 122 is electrically connected to an output terminal of the inverter 15, and the output switch 12 operably or controllably connects one of the normally open safety switch device 11 and the output terminal of the inverter 15 to the AC output terminal 10'.

The normally open safety switch device 11 is preferably a normally open AC relay, and comprises a normally open safety switch 114 connected between the AC input terminal 10 and the first switching terminal 121 of the output switch 12, a magnetic core 111, a coil 112 wound on the magnetic core 111, and a rectifying device 113, wherein an input terminal of the rectifying device 113 is connected to the AC input terminal 10, and an output terminal thereof is connected to two terminals of the coil 112. When the coil 112 is not energized, the normally open safety switch 114 is open; when the coil 112 is energized, the normally open safety switch 114 is closed.

The uninterruptible power supply 1 has the following two operating modes.

When the mains voltage is within a predetermined threshold voltage range (for example, 160 V to 290 V), the coil 112 is energized to cause the normally open safety switch 114 to be on. When the mains power on the AC input terminal 10 is transmitted to the input terminal of the charger 14 through the normally open safety switch 114 that is on, the charger 14 starts operating to provide an auxiliary power supply, such that the uninterruptible power supply 1 is activated without a battery. A coil (not shown in FIG. 1) of the output switch 12 is energized by power supplied from the auxiliary power supply. The common terminal of the output switch 12 is electrically connected to the first switching terminal 121, such that the mains power on the AC input terminal 10 is transmitted to the AC output terminal 10' through the normally open safety switch 114 and the output switch 12 that are on. Moreover, if a user connects the rechargeable battery 13 to an output terminal of the charger 14, then the charger 14 simultaneously charges the rechargeable battery 13 by using the mains power on the AC input terminal 10.

When the mains voltage is abnormal or the mains power is cut off, the normally open safety switch 114 is in the open state, and the output switch 12 is controlled to connect the output terminal of the inverter 15 to the AC output terminal 10'. The processor 110 controls the inverter 15 to operate so as to convert DC from the rechargeable battery 13 to AC and transmit the AC to the AC output terminal 10' through the output switch 12.

The coil 112 of the normally open safety switch device 11 is directly energized by the mains power having a high voltage, such that the coil 112 has a large number of turns, a large volume, and high cost. In addition, the mains voltage on the AC input terminal 10 is within a normal range most of the time (for example, 99% or higher), and the coil 112 of the normally open safety switch device 11 is energized most of the time, such that the normally open safety switch device 11 has high loss.
Further attention is drawn to US 5 579 197 A describing a backup power system that has power supply lines extending from input terminals, connectable to a main AC power system, and output terminals, connectable to a load, with a relay connected in a power supply line. The AC input power is monitored and when a fault in the power is detected, the relay is opened and an inverter is simultaneously turned on to provide backup power from a battery to the output terminals at a phase and frequency synchronized with the AC input voltage before the fault occurs. When the AC power system power is restored, the inverter power is again synchronized with the AC input power at the input terminals, the relay switch is closed and the inverter is turned off to allow the main power system to provide power to the load. The inverter may be providing power to the power lines before the relay contacts are opened to minimize the disruption of power supplied to the load during transfers. The switching of the switching devices in the inverter is cut off if the current drawn by the inverter from the battery exceeds a current limit level, but is turned on again after a short period of time less than a cycle of the AC waveform to again attempt to provide power from the inverter to the load. This process may be repeated, if necessary, to provide power to loads which require higher currents during start-up of the load than during normal operation after start-up.

### SUMMARY

The present invention is set forth in the independent claim 1. Preferred embodiments of the invention are described in the dependent claims.

With respect to the aforementioned technical problems in the prior art, the present invention provides an uninterruptible power supply, comprising:
an AC input terminal and an AC output terminal;
a normally closed safety switch device comprising a normally closed safety switch connected between the AC input terminal and the AC output terminal, a magnetic core, and a coil wound on the magnetic core, wherein a first terminal of the coil is connected to a DC power supply;
a first electronically controllable switch connected between a second terminal of the coil and ground;
an inverter configured to convert DC to AC and transmit the AC to the AC output terminal; and
a control device configured to control the switch state of the first electronically controllable switch on the basis of the AC voltage on the AC input terminal and control the operating state of the inverter on the basis of the voltage on the second terminal of the coil.

Preferably, the control device comprises a processor, the processor being configured to:
output, when the AC voltage is within a predetermined threshold voltage range, a drive signal of a first logic level to a control terminal of the first electronically controllable switch, such that the first electronically controllable switch is controlled to be off and the normally closed safety switch is controlled to be closed; and
output, when the AC voltage is not within the predetermined threshold voltage range, a drive signal of a second logic level to the control terminal of the first electronically controllable switch, such that the first electronically controllable switch is controlled to be on and the normally closed safety switch is controlled to be open.

Preferably, the first logic level is a low level, and the second logic level is a high level.

Preferably, the first electronically controllable switch is a first transistor; a collector of the first transistor is connected to the second terminal of the coil, and an emitter is grounded; the uninterruptible power supply further comprises a first resistor connected between a base of the first transistor and the processor.

Preferably, when the voltage on the second terminal of the coil is at a high level, the processor is configured to control the inverter to not operate; and when the voltage on the second terminal of the coil is at a low level, the processor is configured to control the inverter to operate.

Preferably, the processor has a first pulse width modulation signal output terminal for outputting a first pulse width modulation signal and a second pulse width modulation signal output terminal for outputting a second pulse width modulation signal; the control device comprises a safety control circuit connected to the second terminal of the coil, the first pulse width modulation signal output terminal, and the second pulse width modulation signal output terminal; and the safety control circuit is configured to clamp, when the voltage on the second terminal of the coil is at a high level, the first pulse width modulation signal and the second pulse width modulation signal to a low level, and break, when the voltage on the second terminal of the coil is at a low level, conduction paths between the first pulse width modulation signal and ground and between the second pulse width modulation signal and ground.

Preferably, the safety control circuit comprises: a second electronically controllable switch connected between the first pulse width modulation signal output terminal and ground, a control terminal thereof being electrically connected to the second terminal of the coil; and a third electronically controllable switch connected between the second pulse width modulation signal output terminal and ground, a control terminal thereof being electrically connected to the second terminal of the coil.

Preferably, the second electronically controllable switch is a second transistor; a collector of the second transistor is connected to the first pulse width modulation signal output terminal, and an emitter thereof is grounded; the third electronically controllable switch is a third transistor; a collector of the third transistor is connected to the second pulse width modulation signal output terminal, and an emitter thereof is grounded; and the safety control circuit comprises a second resistor connected between a base of the second transistor and the second terminal of the coil and a third resistor connected between a base of the third transistor and the second terminal of the coil.

Preferably, the uninterruptible power supply comprises an output switch, the output switch controllably connecting one of the normally closed safety switch and an output terminal of the inverter to the AC output terminal.

Preferably, the uninterruptible power supply comprises: a rechargeable battery connected to an input terminal of the inverter; and a charger configured to charge the rechargeable battery by using AC on the AC input terminal.

The uninterruptible power supply of the present invention can be activated without a battery, has the advantages of low cost and low loss, effectively avoids the risk of electric shocks in a battery mode, and improves safety.

### BRIEF DESCRIPTION OF THE DRAWINGS

Embodiments of the present invention are further described below with reference to the accompanying drawings:
FIG. 1 is a schematic circuit diagram of an uninterruptible power supply in the prior art.
FIG. 2 is a schematic circuit diagram of an uninterruptible power supply according to a first embodiment of the present invention.
FIG. 3 is an equivalent circuit diagram of the uninterruptible power supply shown in FIG. 2 operating with the mains voltage being within a predetermined threshold voltage range.
FIG. 4 is an equivalent circuit diagram of the uninterruptible power supply shown in FIG. 2 operating in a battery mode.
FIG. 5 is a schematic circuit diagram of an uninterruptible power supply according to a second embodiment of the present invention.
FIG. 6 is an equivalent circuit diagram of the uninterruptible power supply shown in FIG. 5 operating with the mains voltage being within a predetermined threshold voltage range.
FIG. 7 is an equivalent circuit diagram of the uninterruptible power supply shown in FIG. 5 operating in a battery mode.

### DETAILED DESCRIPTION OF THE EMBODIMENTS

In order to make the objectives, technical solutions and advantages of the present invention clearer, the present invention is further described in detail below through specific embodiments with reference to the accompanying drawings.

In the conventional uninterruptible power supply 1 shown in FIG. 1, in order to reduce a switching time of the output switch 12, a gap between the first switching terminal 121 and the second switching terminal 122 of the output switch 12 is small (for example, 0.3 millimeters). However, in a battery mode, AC outputted by the inverter 15 is transmitted to the AC output terminal 10' through the second switching terminal 122 of the output switch 12, and it is possible that the AC outputted by the inverter 15 reaches the first switching terminal 121, and is transmitted to the normally open safety switch 114.

In order to prevent an operator or a user from receiving an electric shock when touching the AC input terminal 10 in the battery mode, the normally open safety switch device 11 of the uninterruptible power supply 1 in the prior art has to adopt a normally open switch so as to maintain an open state in the battery mode. If a normally closed (or referred to as "break-type") relay is adopted, and a coil 112 in the normally closed relay is energized in the battery mode, then the normally open safety switch 114 is open. If a rectifying device 113 of the normally closed relay is faulty such that no current is present in the coil 112, then the normally closed relay is closed. In this case, accidentally touching the AC input terminal 10 may put the operator or the user at risk of receiving an electric shock. Due to safety requirements, the prior art prohibits a person skilled in the art from replacing the normally open safety switch device 11 in FIG. 1 with a normally closed safety switch device.

For ease of description, "high level" and "low level" mentioned in the following are relative. "High level" may refer to a voltage higher than 2 V, for example, a voltage of 3.3 V, 5 V, or 12 V. "Low level" may refer to a voltage lower than 0.3 V or 0.7 V. For different electronic components and DC supply voltages, "high level" and "low level" may indicate different values, and the present invention is not intended to limit specific values thereof. In the field of electronic circuits, the terms "high level" and "low level" mentioned in the present invention are well-known by a person skilled in the art.

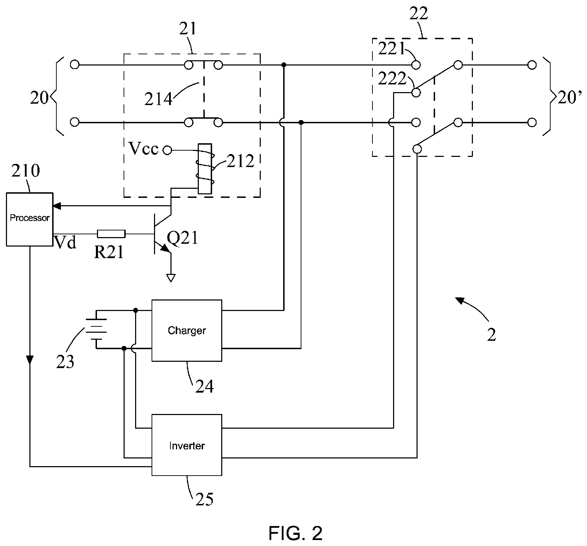

FIG. 2 is a schematic circuit diagram of an uninterruptible power supply according to a first embodiment of the present invention. As shown in FIG. 2, FIG. 2 is substantially the same as FIG. 1, and differs from FIG. 1 in that an uninterruptible power supply 2 comprises a normally closed safety switch device 21, a transistor Q21, a resistor R21, and a control device formed by reusing a processor 210 in the uninterruptible power supply 2.

The normally closed safety switch device 21 is preferably a normally closed DC relay, and comprises a normally closed safety switch 214 connected between an AC input terminal 20 and a first switching terminal 221 of an output switch 22, a magnetic core, and a coil 212 wound on the magnetic core. A first terminal of the coil 212 is connected to a DC power supply Vcc, and a second terminal thereof is connected to a collector of the transistor Q21. An emitter of the transistor Q21 is grounded, and a base is connected to a drive signal output terminal of the processor 210 by means of the resistor R21. The processor 210 monitors the voltage on the collector of the transistor Q21 so as to control an inverter 25 to operate or not, and monitors the mains voltage on the AC input terminal 20 so as to output a high-level or low-level drive signal Vd to the base of the transistor Q21.

An operating mode of the uninterruptible power supply 2 is described below with reference to an equivalent circuit diagram thereof.

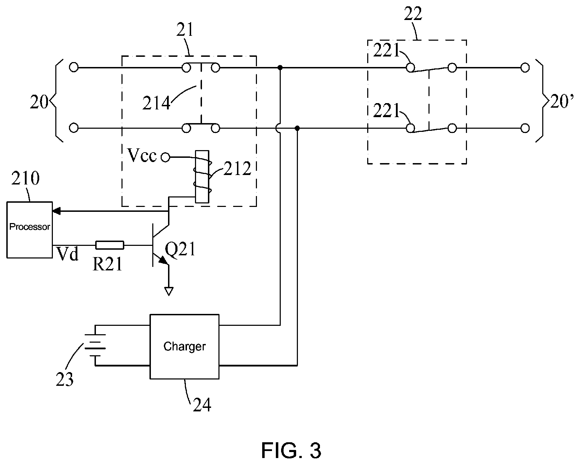

FIG. 3 is an equivalent circuit diagram of the uninterruptible power supply shown in FIG. 2 operating with the mains voltage being within a predetermined threshold voltage range. When the processor 210 detects that the mains voltage is within the predetermined threshold voltage range, the processor 210 outputs a low-level drive signal Vd, and the drive signal Vd is outputted to the base of the transistor Q21 (equivalent to a control terminal of the transistor) through the resistor R21. In this case, the emitter of the transistor Q21 is reverse-biased, the transistor Q21 is off, and the coil 212 is not energized; therefore, the normally closed safety switch 214 is on. The mains power on the AC input terminal 20 is transmitted to an input terminal of a charger 24 through the normally closed safety switch 214 that is on. The charger 24 starts operating to provide an auxiliary power supply, such that the uninterruptible power supply 2 is activated without a battery. In another embodiment, a rechargeable battery can be connected as an auxiliary power supply to implement activation. When power is supplied by the auxiliary power supply, a common terminal of the output switch 22 is electrically connected to the first switching terminal 221, such that the mains power on the AC input terminal 20 is transmitted to the AC output terminal 20' through the normally closed safety switch 214 and the output switch 22 that are on. Moreover, if a user connects a rechargeable battery 23 to an output terminal of the charger 24, the charger 24 simultaneously charges the rechargeable battery 23 by using the mains power on the AC input terminal 20.

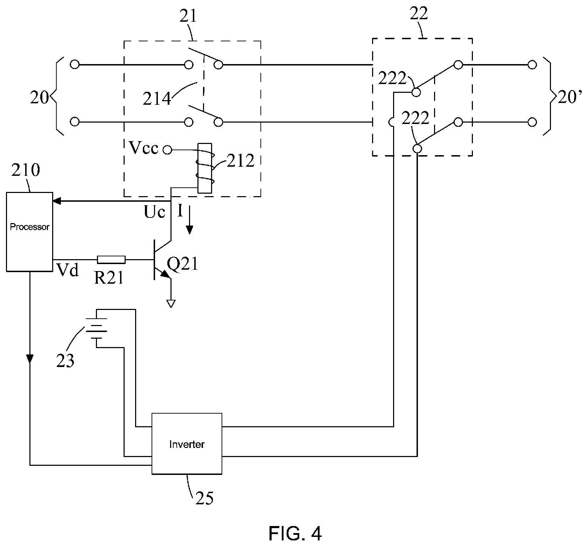

FIG. 4 is an equivalent circuit diagram of the uninterruptible power supply shown in FIG. 2 operating in a battery mode. When the processor 210 detects that the mains voltage is not within the predetermined threshold voltage range, that is, the mains voltage is abnormal or the mains power is cut off, then the processor 210 outputs a high-level drive signal Vd to the base of the transistor Q21. In this case, the emitter of the transistor Q21 is forward-biased, the transistor Q21 is on, and the coil 212 is energized and has current I; therefore, the normally closed safety switch 214 is open. Meanwhile, the output switch 22 is controlled so as to connect an output of the inverter 25 to the AC output terminal 20'. Upon detecting that a voltage Uc on the collector of the transistor Q21 is at a low level, the processor 210 controls the inverter 25 to operate so as to convert DC from the rechargeable battery 23 to AC and transmit the AC to the AC output terminal 20' through the output switch 22.

If the collector and the emitter of the transistor Q21 are short-circuited in the battery mode, then the current I is still present in the coil 212, and the normally closed safety switch 214 is open. Therefore, there is no risk of an electric shock. Meanwhile, the voltage Uc on the collector of the transistor Q21 is at a low level. Upon detecting that the voltage Uc on the collector of the transistor Q21 remains at a low level, the processor 210 controls the inverter 25 to operate so as to convert DC from the rechargeable battery 23 to AC.

If the collector and the emitter of the transistor Q21 are disconnected from each other in the battery mode, then the current in the coil 212 decreases to zero, and the normally closed safety switch 214 is on. In this case, the voltage Uc on the collector of the transistor Q21 changes, that is, changes from a low level to a high level (approximately lower than the DC power supply Vcc). Upon detecting that the voltage Uc on the collector of the transistor Q21 is at a high level, the processor 210 outputs a control signal (such as a low level control signal) to the inverter 25 so as to cause the inverter 25 to stop operating.

The processor 210 of the present embodiment monitors the voltage Uc on the collector of the transistor Q21, controls, when the voltage Uc on the collector of the transistor Q21 is at a high level, the inverter 25 to not operate, and controls, when the voltage Uc on the collector of the transistor Q21 is at a low level, the inverter 25 to operate. It can be seen from above that, when the transistor Q21 is damaged in the battery mode, the voltage Uc on the collector thereof changes from a low level to a high level, the normally closed safety switch 214 is on, and simultaneously the processor 210 causes the inverter 25 to stop operating, thereby effectively avoiding the risk of receiving an electric shock and improving safety.

In the present embodiment, the DC power supply Vcc can be provided by an auxiliary power supply or the rechargeable battery 23, and the cost of the uninterruptible power supply 2 is not increased.

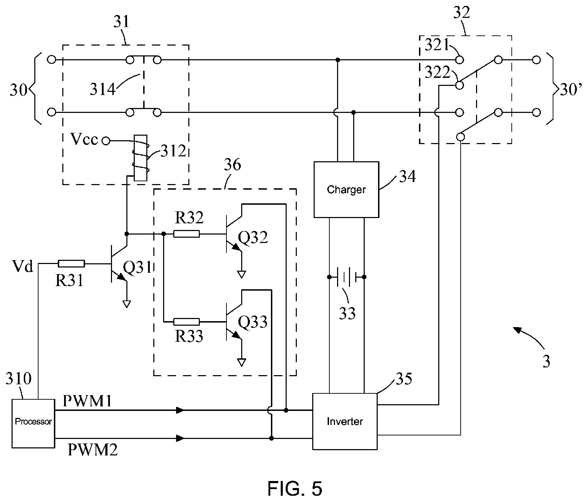

FIG. 5 is a schematic circuit diagram of an uninterruptible power supply according to a second embodiment of the present invention. As shown in FIG. 5, FIG. 5 is substantially the same as FIG. 1, and differs from FIG. 1 in that an uninterruptible power supply 3 comprises a normally closed safety switch device 31, a first transistor Q31, a first resistor R31, and a control device formed from a processor 310 and a safety control circuit 36.

The normally closed safety switch device 31 also comprises a normally closed safety switch 314, a magnetic core, a coil 312 wound on the magnetic core. The normally closed safety switch device 31, the first resistor R31, the first transistor Q31, and connecting structures thereof are the same as the normally closed safety switch device 21, the resistor R21, and the transistor Q21 shown in FIG. 2, and details will not be described herein again.

The safety control circuit 36 comprises a second resistor R32, a second transistor Q32, a third resistor R33, and a third transistor Q33, wherein a base of the second transistor Q32 is connected to a collector of the first transistor Q31 by means of the second resistor R32; a collector of the second transistor Q32 is connected to a first pulse width modulation signal output terminal of the processor 310; an emitter of the second transistor Q32 is grounded; a base of the third transistor Q33 is connected to the collector of the first transistor Q31 by means of the third resistor R33; a collector of the third transistor Q33 is connected to a second pulse width modulation signal output terminal of the processor 310; and an emitter of the third transistor Q33 is grounded.

An operating mode of the uninterruptible power supply 3 is described below with reference to an equivalent circuit diagram thereof.

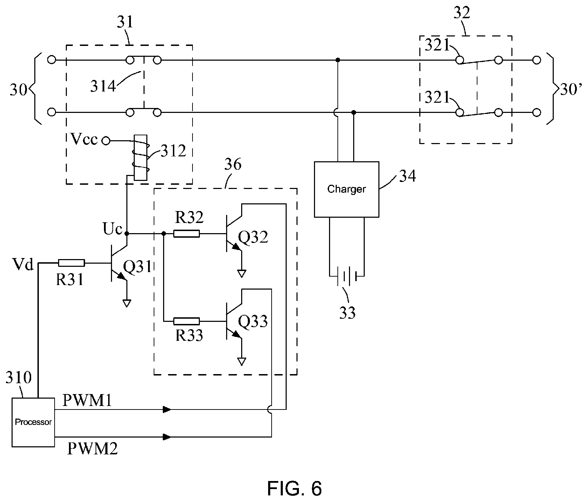

FIG. 6 is an equivalent circuit diagram of the uninterruptible power supply shown in FIG. 5 operating with the mains voltage being within a predetermined threshold voltage range. When the processor 310 detects that the mains voltage is within the predetermined threshold voltage range, the processor 310 outputs a low-level drive signal Vd to the first resistor R31, an emitter of the first transistor Q31 is reverse-biased, the first transistor Q31 is off, and the coil 312 is not energized; therefore, the normally closed safety switch 314 is on. When the mains power on an AC input terminal 30 is transmitted to an input terminal of a charger 34 through the normally closed safety switch 314 that is on, the charger 34 starts operating to provide an auxiliary power supply, such that the uninterruptible power supply 3 is activated without a battery. When power is supplied by the auxiliary power supply, a common terminal of an output switch 32 is electrically connected to a first switching terminal 321, such that the mains power on the AC input terminal 30 is transmitted to an AC output terminal 30' through the normally closed safety switch 314 and the output switch 32 that are on. Moreover, if a user connects a rechargeable battery 33 to an output terminal of the charger 34, then the charger 34 simultaneously charges the rechargeable battery 33 by using the mains power on the AC input terminal 30.

In the equivalent circuit diagram shown in FIG. 6, the voltage Uc on the collector of the first transistor Q31 is at a high level (approximately lower than a DC power supply Vcc); the emitter of the second transistor Q32 and the emitter of the third transistor Q33 are forward-biased; the second transistor Q32 has a base current and the third transistor Q33 has a base current. In order to ensure that the normally closed safety switch 314 is on, the second resistor R32 and the third resistor R33 having large resistance values (such as 100 kilohm) are adopted, such that the sum of the base current of the second transistor Q32 and the base current of the third transistor Q33 are at a microamp level, thereby preventing the current in the coil 312 from being so large as to switch the normally closed safety switch 314 from the on state to the open state.

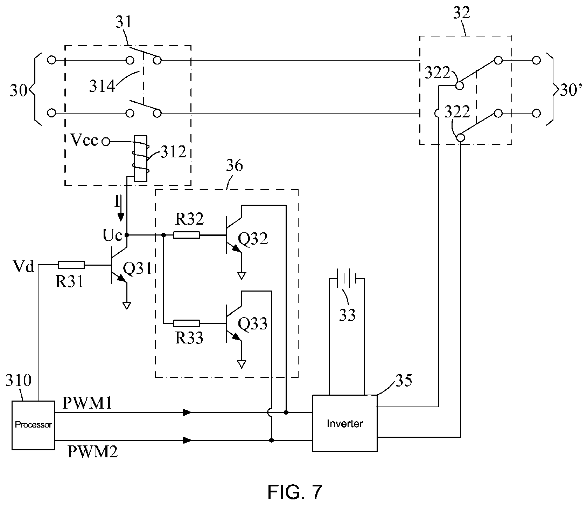

FIG. 7 is an equivalent circuit diagram of the uninterruptible power supply shown in FIG. 5 operating in a battery mode. When the processor 310 detects that the mains voltage is not within the predetermined threshold voltage range, that is, the mains voltage is abnormal or the mains power is cut off, the processor 310 outputs a high-level drive signal Vd to a base of the first transistor Q31. The emitter of the first transistor Q31 is forward-biased, the first transistor Q31 is on, the coil 312 is energized and has current I; therefore, the normally closed safety switch 314 is open. Meanwhile, the output switch 32 is controlled to connect an output terminal of the inverter 35 to the AC output terminal 30'.

In the battery mode, the high-level drive signal Vd outputted by the processor 310 causes the first transistor Q31 to be on, and the voltage Uc on the collector of the first transistor Q31 is at a low level. The emitter of the second transistor Q32 and the emitter of the third transistor Q33 are reverse-biased, and therefore the second transistor Q32 and the third transistor Q33 are both in the off state. Thus, a first pulse width modulation signal PWM1 outputted by the first pulse width modulation signal output terminal of the processor 310 and a second pulse width modulation signal PWM2 outputted by the second pulse width modulation signal output terminal of the processor 310 are not clamped to a low level. The first pulse width modulation signal PWM1 and the second pulse width modulation signal PWM2 outputted by the processor 310 are respectively provided to an upper bridge arm drive circuit and a lower bridge arm drive circuit (not shown in FIG. 7) of the inverter 35, and the inverter 35 is controlled to operate so as to convert DC from the rechargeable battery 33 to AC and transmit the AC to the AC output terminal 30' through the output switch 32.

If the collector and the emitter of the first transistor Q31 are short-circuited in the battery mode, then the current I is still present in the coil 312, and the normally closed safety switch 314 is open. Therefore, there is no risk of an electric shock. Meanwhile, the voltage Uc on the collector of the first transistor Q31 is at a low level, such that the second transistor Q32 and the third transistor Q32 are in the off state. The first pulse width modulation signal PWM1 and the second pulse width modulation signal PWM2 outputted by the processor 310 are provided to the upper bridge arm drive circuit and the lower bridge arm drive circuit of the inverter 35, and the inverter 35 is controlled to operate so as to convert DC from the rechargeable battery 33 to AC.

If the collector and the emitter of the first transistor Q31 are disconnected from each other in the battery mode, the collector and the emitter of the first transistor Q31 are disconnected from each other, then the current I in the coil 312 decreases to zero, and the normally closed safety switch 314 is on. In this case, the voltage Uc on the collector of the first transistor Q31 changes, that is, changes from a low level to a high level (approximately lower than the DC power supply Vcc); the emitter of the second transistor Q32 and the emitter of the third transistor Q33 are forward-biased, and the second transistor Q32 and the third transistor Q33 are on, such that the first pulse width modulation signal PWM1 and the second pulse width modulation signal PWM2 outputted by the processor 310 are clamped to a low level, and the inverter 35 is controlled to stop operating.

The safety control circuit 36 of the present embodiment receives the voltage Uc on the collector of the first transistor Q31. When the voltage Uc on the collector of the first transistor Q31 is at a high level, the safety control circuit 36 is configured to clamp the first pulse width modulation signal PWM1 and the second pulse width modulation signal PWM2 outputted by the processor 310 to a low level, such that the inverter 35 does not operate. When the voltage Uc on the collector of the first transistor Q31 is at a low level, the safety control circuit 36 does not affect the first pulse width modulation signal PWM1 and the second pulse width modulation signal PWM2 outputted by the processor 310, such that the inverter 35 operates. It can be seen from above that, when the first transistor Q31 is damaged in the battery mode, the voltage Uc on the collector thereof changes from a low level to a high level; the normally closed safety switch 314 is on, and simultaneously the safety control circuit 36 causes the inverter 35 to stop operating, thereby effectively avoiding the risk of an electric shock and improving safety.

The prices of the electronically controllable switches, such as transistors and resistors, in the uninterruptible power supply of the present invention are extremely low, and the price of a DC relay is far lower than that of an AC replay in a conventional uninterruptible power supply, thereby reducing the cost of the uninterruptible power supply of the present invention. The low voltage DC power supply Vcc is provided to the coil of the normally closed safety switch, and the coil has low loss. Additionally, the uninterruptible power supply is most of the time in a normal power supply mode, and, most of the time, the coil of the normally closed safety switch is not on and has no loss, thereby greatly reducing loss.

By overcoming the technical prejudice in the prior art, the applicant of the present invention selects a normally closed safety switch, thereby effectively avoiding the risk of receiving an electric shock in the battery mode and simultaneously reducing cost and loss.

In other embodiments of the present invention, the transistors Q21 and Q31 in the aforementioned embodiments can be replaced with various electronically controllable switches such as metal-oxide-semiconductor field-effect transistors, insulated gate bipolar transistors, or gate turn-off thyristors. Preferably, the first electronically controllable switch connected between the second terminal of the coil and ground is controlled to be off by a drive signal of a first logic level (such as a low level), and controlled to be on by a drive signal of a second logic level (such as a high level). Therefore, most of the time, the processor outputs a low-level drive signal to control the first electronically controllable switch to be in the off state most of the time, thereby reducing power consumption of the processor.

In other embodiments of the present invention, the first electronically controllable switch can be controlled to be on by the drive signal of the first logic level, and can be controlled to be off by the drive signal of the second logic level.

In other embodiments of the present invention, the second transistor Q32 and the third transistor Q33 in the safety control circuit 36 are replaced with voltage-controlled power transistors such as metal-oxide-semiconductor field-effect transistors or insulated gate bipolar transistors. The gate of the metal-oxide-semiconductor field-effect transistor or the gate of the insulated gate bipolar transistor (equivalent to a control terminal thereof) is electrically connected to the collector of the first transistor Q31, and the first pulse width modulation signal output terminal and the second pulse width modulation signal output terminal of the processor 310 are respectively grounded by means of the metal-oxide-semiconductor field-effect transistors or insulated gate bipolar transistors.

In other embodiments of the present invention, the safety control circuit 36 in the aforementioned embodiments are replaced with another safety control circuit; the safety control circuit is electrically connected to the collector of the first transistor Q31 and the pulse width modulation signal output terminals of the processor 310; when the voltage Uc on the collector of the first transistor Q31 is at a high level, the safety control circuit is configured to ground the first pulse width modulation signal PWM1 and the second pulse width modulation signal PWM2 outputted by the processor 310 or to clamp the first pulse width modulation signal PWM1 and the second pulse width modulation signal PWM2 outputted by the processor 310 to a low level, such that the inverter stops operating; and when the voltage Uc on the collector of the first transistor Q31 is at a low level, the safety control circuit is configured to break conduction paths between the first pulse width modulation signal PWM1 outputted by the processor 310 and ground and between the second pulse width modulation signal PWM2 outputted by the processor 310 and ground.

The present invention is not intended to limit the specific circuit connection relationship of an inverter, and the inverter can be a full-bridge inverter, and can also be a half-bridge inverter.

The present invention is not intended to limit the specific value range of a predetermined threshold voltage, and the value range can be configured according to the magnitude of the mains power and the operating voltage of a load. For example, for a mains power of 220 V, the predetermined threshold voltage range can be 160-290 V, 180-240 V, or the like.

Although the present invention has been described through preferred embodiments, the present invention is not limited to the embodiments described herein, but includes various changes and variations made without departing from the scope of the present invention.

## Claims

1. An uninterruptible power supply (2), comprising:
an AC input terminal (20) and an AC output terminal (20');
a normally closed safety switch device (21), comprising a normally closed safety switch (214) connected between the AC input terminal and the AC output terminal, a magnetic core, and a coil (212) wound on the magnetic core, wherein a first terminal of the coil is connected to a DC power supply (Vcc);
a first electronically controllable switch (Q21), connected between a second terminal of the coil and ground;
an inverter (25), configured to convert DC to AC and transmit the AC to the AC output terminal; and
a control device (210), configured to control the switch state of the first electronically controllable switch on the basis of the AC voltage on the AC input terminal and control the operating state of the inverter on the basis of the voltage on the second terminal of the coil.

2. The uninterruptible power supply according to claim 1, wherein the control device comprises a processor, the processor being configured to:
output, when the AC voltage is within a predetermined threshold voltage range, a drive signal of a first logic level to a control terminal of the first electronically controllable switch, such that the first electronically controllable switch is controlled to be off and the normally closed safety switch is controlled to be closed; and
output, when the AC voltage is not within the predetermined threshold voltage range, a drive signal of a second logic level to the control terminal of the first electronically controllable switch, such that the first electronically controllable switch is controlled to be on and the normally closed safety switch is controlled to be open.

3. The uninterruptible power supply according to claim 2, wherein the first logic level is a low level, and the second logic level is a high level.

4. The uninterruptible power supply according to claim 2, wherein the first electronically controllable switch is a first transistor; a collector of the first transistor is connected to the second terminal of the coil, and an emitter is grounded; the uninterruptible power supply further comprises a first resistor connected between a base of the first transistor and the processor.

5. The uninterruptible power supply according to any one of claims 2 to 4, wherein when the voltage on the second terminal of the coil is at a high level, the processor is configured to control the inverter to not operate; and when the voltage on the second terminal of the coil is at a low level, the processor is configured to control the inverter to operate.

6. The uninterruptible power supply according to any one of claims 2 to 4, wherein the processor has a first pulse width modulation signal output terminal for outputting a first pulse width modulation signal and a second pulse width modulation signal output terminal for outputting a second pulse width modulation signal; the control device comprises a safety control circuit connected to the second terminal of the coil, the first pulse width modulation signal output terminal, and the second pulse width modulation signal output terminal; and the safety control circuit is configured to clamp, when the voltage on the second terminal of the coil is at a high level, the first pulse width modulation signal and the second pulse width modulation signal to a low level, and break, when the voltage on the second terminal of the coil is at a low level, conduction paths between the first pulse width modulation signal and ground and between the second pulse width modulation signal and ground.

7. The uninterruptible power supply according to claim 6, wherein the safety control circuit comprises:
a second electronically controllable switch, connected between the first pulse width modulation signal output terminal and ground, a control terminal thereof being electrically connected to the second terminal of the coil; and
a third electronically controllable switch, connected between the second pulse width modulation signal output terminal and ground, a control terminal thereof being electrically connected to the second terminal of the coil.

8. The uninterruptible power supply according to claim 7, wherein the second electronically controllable switch is a second transistor; a collector of the second transistor is connected to the first pulse width modulation signal output terminal, and an emitter thereof is grounded; the third electronically controllable switch is a third transistor; a collector of the third transistor is connected to the second pulse width modulation signal output terminal, and an emitter thereof is grounded; and the safety control circuit comprises a second resistor connected between a base of the second transistor and the second terminal of the coil and a third resistor connected between a base of the third transistor and the second terminal of the coil.

9. The uninterruptible power supply according to any one of claims 1 to 4, comprising an output switch, the output switch controllably connecting one of the normally closed safety switch and an output terminal of the inverter to the AC output terminal.

10. The uninterruptible power supply according to claim 9, comprising:
a rechargeable battery, connected to an input terminal of the inverter; and
a charger, configured to charge the rechargeable battery by using AC on the AC input terminal.

## Patentansprüche

1. Eine unterbrechungsfreie Stromversorgung (2), die Folgendes aufweist:
ein Wechselstrom-Eingangsanschluss (20) und ein Wechselstrom-Ausgangsanschluss (20');
eine normalerweise geschlossene Sicherheitsschaltvorrichtung (21), die einen normalerweise geschlossenen Sicherheitsschalter (214), der zwischen dem Wechselstrom-Eingangsanschluss und dem Wechselstrom-Ausgangsanschluss verbunden ist, einen Magnetkern und eine auf den Magnetkern gewickelte Spule (212) aufweist, wobei ein erster Anschluss der Spule mit einer Gleichstrom-Stromversorgung (Vcc) verbunden ist;
einen ersten elektronisch steuerbaren Schalter (Q21), der zwischen einem zweiten Anschluss der Spule und Erde verbunden ist;
einen Wechselrichter (25), konfiguriert, um Gleichstrom in Wechselstrom umzuwandeln und den Wechselstrom an den Wechselstrom-Ausgangsanschluss zu senden; und
eine Steuervorrichtung (210), konfiguriert, um den Schaltzustand des ersten elektronisch steuerbaren Schalters auf der Grundlage der Wechselspannung am Wechselstrom-Eingangsanschluss zu steuern und den Betriebszustand des Wechselrichters auf der Grundlage der Spannung am zweiten Anschluss der Spule zu steuern.

2. Unterbrechungsfreie Stromversorgung nach Anspruch 1, wobei die Steuervorrichtung einen Prozessor aufweist, wobei der Prozessor konfiguriert ist zum:
Ausgeben eines Treibersignals eines ersten logischen Pegels an ein Steuerelement des ersten elektronisch steuerbaren Schalters, wenn die Wechselspannung innerhalb eines vorbestimmten Schwellenspannungsbereichs liegt, so dass der erste elektronisch steuerbare Schalter auf Aus gesteuert wird und der normalerweise geschlossene Sicherheitsschalter auf geschlossen gesteuert wird; und
Ausgeben eines Treibersignals mit einem zweiten logischen Pegel an das Steuerelement des ersten elektronisch steuerbaren Schalters, wenn die Wechselspannung nicht innerhalb des vorbestimmten Schwellenspannungsbereichs liegt, so dass der erste elektronisch steuerbare Schalter auf Ein gesteuert wird und der normalerweise geschlossene Sicherheitsschalter auf geöffnet gesteuert wird.

3. Unterbrechungsfreie Stromversorgung nach Anspruch 2, wobei der erste logische Pegel ein niedriger Pegel ist und der zweite logische Pegel ein hoher Pegel ist.

4. Unterbrechungsfreie Stromversorgung nach Anspruch 2, wobei der erste elektronisch steuerbare Schalter ein erster Transistor ist; ein Kollektor des ersten Transistors mit dem zweiten Anschluss der Spule verbunden ist und ein Emitter geerdet ist; die unterbrechungsfreie Stromversorgung ferner einen ersten Widerstand aufweist, der zwischen einer Basis des ersten Transistors und dem Prozessor angeschlossen ist.

5. Unterbrechungsfreie Stromversorgung nach einem der Ansprüche 2 bis 4, wobei der Prozessor so konfiguriert ist, dass er das Steuerelement so steuert, dass es nicht betriebsfähig ist, wenn die Spannung am zweiten Anschluss der Spule auf einem hohen Pegel liegt; und der Prozessor so konfiguriert ist, dass er den Wechselrichter so steuert, dass er betriebsfähig ist, wenn die Spannung am zweiten Anschluss der Spule auf einem niedrigen Pegel liegt.

6. Unterbrechungsfreie Stromversorgung nach einem der Ansprüche 2 bis 4, wobei der Prozessor einen ersten Pulsweitenmodulationssignal-Ausgangsanschluss zum Ausgeben eines ersten Pulsweitenmodulationssignals und einen zweiten Pulsweitenmodulationssignal-Ausgangsanschluss zum Ausgeben eines zweiten Pulsweitenmodulationssignals aufweist; die Steuervorrichtung eine Sicherheitssteuerschaltung aufweist, die mit dem zweiten Anschluss der Spule, dem ersten Pulsweitenmodulationssignal-Ausgangsanschluss und dem zweiten Pulsweitenmodulationssignal-Ausgangsanschluss verbunden ist; und die Sicherheitssteuerschaltung konfiguriert ist, um, wenn die Spannung am zweiten Anschluss der Spule auf einem hohen Pegel liegt, das erste Pulsweitenmodulationssignal und das zweite Pulsweitenmodulationssignal auf einen niedrigen Pegel zu klemmen und, wenn die Spannung am zweiten Anschluss der Spule auf einem niedrigen Pegel liegt, Leitungspfade zwischen dem ersten Pulsweitenmodulationssignal und Erde und zwischen dem zweiten Pulsweitenmodulationssignal und Erde zu brechen.

7. Unterbrechungsfreie Stromversorgung nach Anspruch 6, wobei die Sicherheitssteuerschaltung Folgendes aufweist:
einen zweiten elektronisch steuerbaren Schalter, der zwischen dem ersten Pulsweitenmodulationssignal-Ausgangsanschluss und Erde verbunden ist, wobei ein Steuerelement davon elektrisch mit dem zweiten Anschluss der Spule verbunden ist; und
einen dritten elektronisch steuerbaren Schalter, der zwischen dem zweiten Pulsweitenmodulationssignal-Ausgangsanschluss und Erde verbunden ist, wobei ein Steuerelement davon elektrisch mit dem zweiten Anschluss der Spule verbunden ist.

8. Unterbrechungsfreie Stromversorgung nach Anspruch 7, wobei der zweite elektronisch steuerbare Schalter ein zweiter Transistor ist; ein Kollektor des zweiten Transistors mit dem ersten Pulsweitenmodulationssignal-Ausgangsanschluss verbunden ist und ein Emitter davon geerdet ist; der dritte elektronisch steuerbare Schalter ein dritter Transistor ist; ein Kollektor des dritten Transistors mit dem zweiten Pulsweitenmodulationssignal-Ausgangsanschluss verbunden ist, und ein Emitter davon geerdet ist; und die Sicherheitssteuerschaltung einen zweiten Widerstand aufweist, der zwischen einer Basis des zweiten Transistors und dem zweiten Anschluss der Spule verbunden ist, und einen dritten Widerstand, der zwischen einer Basis des dritten Transistors und dem zweiten Anschluss der Spule verbunden ist.

9. Unterbrechungsfreie Stromversorgung nach einem der Ansprüche 1 bis 4, die einen Ausgangsschalter aufweist, wobei der Ausgangsschalter einen des normalerweise geschlossenen Sicherheitsschalters und eines Ausgangsanschlusses des Wechselrichters steuerbar mit dem Wechselstrom-Ausgangsanschluss verbindet.

10. Unterbrechungsfreie Stromversorgung nach Anspruch 9, die Folgendes aufweist:
eine wiederaufladbare Batterie, die mit einem Eingangsanschluss des Wechselrichters verbunden ist; und
ein Ladegerät, konfiguriert zum Laden der wiederaufladbaren Batterie unter Verwendung von Wechselstrom am Wechselstrom-Eingangsanschluss.

## Revendications

1. Alimentation électrique sans coupure (2) comprenant :
une borne d'entrée CA (20) et une borne de sortie CA (20') ;
un dispositif de commutateur de sécurité normalement fermé (21), comprenant un commutateur de sécurité normalement fermé (214) connecté entre la borne d'entrée CA et la borne de sortie CA, un noyau magnétique et une bobine (212) enroulée sur le noyau magnétique, dans laquelle une première borne de la bobine est connectée à une alimentation CC (Vcc) ;
un premier commutateur à commande électronique (Q21), connecté entre une seconde borne de la bobine et la masse ;
un onduleur (25), conçu pour convertir le CC en CA et transmettre le CA à la borne de sortie CA ; et
un dispositif de commande (210), conçu pour commander l'état de commutation du premier commutateur à commande électronique sur la base de la tension alternative sur la borne d'entrée CA et pour commander l'état de fonctionnement de l'onduleur sur la base de la tension sur la seconde borne de la bobine.

2. Alimentation électrique sans coupure selon la revendication 1, dans laquelle le dispositif de commande comprend un processeur, le processeur étant configuré pour :
sortir, lorsque la tension alternative se situe dans une plage de tension seuil prédéterminée, un signal d'attaque d'un premier niveau logique vers une borne de commande du premier commutateur à commande électronique, de sorte que le premier commutateur à commande électronique soit mis hors tension et que le commutateur de sécurité normalement fermé soit fermé ; et
sortir, lorsque la tension alternative ne se situe pas dans la plage de tension seuil prédéterminée, un signal d'attaque d'un second niveau logique vers la borne de commande du premier commutateur à commande électronique, de sorte que le premier commutateur à commande électronique soit mis sous tension et que le commutateur de sécurité normalement fermé soit ouvert.

3. Alimentation électrique sans coupure selon la revendication 2, dans laquelle le premier niveau logique est un niveau bas et le second niveau logique est un niveau élevé.

4. Alimentation électrique sans coupure selon la revendication 2, dans laquelle le premier commutateur à commande électronique est un premier transistor ; un collecteur du premier transistor est connecté à la seconde borne de la bobine et un émetteur est mis à la masse ; l'alimentation électrique sans coupure comprend en outre une première résistance connectée entre une base du premier transistor et le processeur.

5. Alimentation électrique sans coupure selon l'une quelconque des revendications 2 à 4, dans laquelle, lorsque la tension sur la seconde borne de la bobine est à un niveau élevé, le processeur est configuré pour empêcher le fonctionnement de l'onduleur ; et lorsque la tension sur la seconde borne de la bobine est à un niveau bas, le processeur est configuré pour activer l'onduleur.

6. Alimentation électrique sans coupure selon l'une quelconque des revendications 2 à 4, dans laquelle le processeur comporte une première borne de sortie de signal de modulation de largeur d'impulsion pour sortir un premier signal de modulation de largeur d'impulsion et une seconde borne de sortie de signal de modulation de largeur d'impulsion pour sortir un second signal de modulation de largeur d'impulsion ; le dispositif de commande comprend un circuit de commande de sécurité connecté à la seconde borne de la bobine, à la première borne de sortie de signal de modulation de largeur d'impulsion et à la seconde borne de sortie de signal de modulation de largeur d'impulsion ; et le circuit de commande de sécurité est configuré pour caler, lorsque la tension sur la seconde borne de la bobine est à un niveau élevé, le premier signal de modulation de largeur d'impulsion et le second signal de modulation de largeur d'impulsion à un niveau bas, et pour couper, lorsque la tension sur la seconde borne de la bobine est à un niveau bas, les chemins de conduction entre le premier signal de modulation de largeur d'impulsion et la masse et entre le second signal de modulation de largeur d'impulsion et la masse.

7. Alimentation électrique sans coupure selon la revendication 6, dans laquelle le circuit de commande de sécurité comprend :
un deuxième commutateur à commande électronique, connecté entre la première borne de sortie de signal de modulation de largeur d'impulsion et la masse, une borne de commande de celui-ci étant connectée électriquement à la seconde borne de la bobine ; et
un troisième commutateur à commande électronique, connecté entre la seconde borne de sortie de signal de modulation de largeur d'impulsion et la masse, une borne de commande de celui-ci étant connectée électriquement à la seconde borne de la bobine.

8. Alimentation électrique sans coupure selon la revendication 7, dans laquelle le deuxième commutateur à commande électronique est un deuxième transistor ; un collecteur du deuxième transistor est connecté à la première borne de sortie de signal de modulation de largeur d'impulsion, et un émetteur de celui-ci est mis à la masse ; le troisième commutateur à commande électronique est un troisième transistor ; un collecteur du troisième transistor est connecté à la seconde borne de sortie de signal de modulation de largeur d'impulsion, et un émetteur de celui-ci est mis à la masse ; et le circuit de commande de sécurité comprend une deuxième résistance connectée entre une base du deuxième transistor et la seconde borne de la bobine et une troisième résistance connectée entre une base du troisième transistor et la seconde borne de la bobine.

9. Alimentation électrique sans coupure selon l'une quelconque des revendications 1 à 4, comprenant un commutateur de sortie, le commutateur de sortie connectant de manière contrôlée un élément parmi le commutateur de sécurité normalement fermé et une borne de sortie de l'onduleur à la borne de sortie CA.

10. Alimentation électrique sans coupure selon la revendication 9 comprenant :
une batterie rechargeable, connectée à une borne d'entrée de l'onduleur ; et
un chargeur, conçu pour charger la batterie rechargeable à l'aide du CA sur la borne d'entrée CA.
